# EUROPEAN PATENT SPECIFICATION

(11) **EP 2 713 035 B1**
(45) Date of publication and mention of the grant of the patent: **05.04.2017**
(21) Application number: 13185020.8
(22) Date of filing: 18.09.2013
(51) Int. Cl.: F02G 5/02, F02D 11/10

(54) **Initialization processing apparatus for cogeneration system having gas engine**
Initialisierungsverarbeitungsvorrichtung für Kraft-Wärme-Kopplungssystem mit Gasmotor
Appareil de traitement d'initialisation pour système de cogénération ayant un moteur à gaz

(30) Priority: 27.09.2012 JP 2012214424
(43) Date of publication of application: 02.04.2014
(73) Proprietor: Honda Motor Co., Ltd., Tokyo 107-8556 (JP)
(72) Inventor: Ikeda, Naohiro, Wako-shi, Saitama 351-0193 (JP); Bungo, Keiichiro, Wako-shi, Saitama 351-0193 (JP)
(74) Representative: Piésold, Alexander James

(56) References cited:
- EP-A1- 0 121 938
- EP-A1- 2 481 906
- EP-A2- 2 058 489
- EP-A2- 2 128 420
- US-A1- 2009 045 626

## Description

This invention relates to an initialization processing apparatus for a cogeneration system having a gas engine, and particularly to an initialization processing apparatus at starting the gas engine when no power is supplied from the cogeneration system.

An initialization processing apparatus for a cogeneration system having a gas engine is taught, for example, by Japanese Laid-Open Patent Application No. 2012-154276.

The cogeneration system mentioned in the reference is equipped with a gas engine, a generator placed at a position near a flywheel connected to the engine crankshaft and adapted to be connectable to an AC power feed line between a commercial power source and an electrical load, and a motor-driven jet having a stepper motor that moves a needle between a fully-opened position and a fully-closed position such that gas flowing in a gas supply passage is regulated and mixed with air flowing in an air supply passage.

The initialization processing apparatus comprises an electronic control unit (ECU) constituted as a microcomputer and connected to the commercial power source and the generator, and is adapted to conduct initialization processing to rotate the stepper motor to move the needle to a desired position at starting of the cogeneration system when supplied with power from the commercial power source.

In the reference, the initialization processing at starting is ordinarily conducted by rotating the stepper motor to move the needle from the fully-opened position up to the fully-closed position (defined by a mechanical stopper), and after the needle strikes the stopper, return it towards the fully-opened position by a distance corresponding to a desired needle position.

To be more specific, since a present or exact needle position is not known, the motor is rotated by N steps (a distance necessary for the needle to move from the fully-opened position up to the fully-closed position) + margin α so that the needle surely runs into and strikes the stopper, and then the motor is rotated by predetermined steps so as to bring the needle to the desired position.

Upon completion of the initialization processing, the gas is mixed with the air at a proper ratio while gas pressure is regulated by a gas pressure regulator valve, and the resultant air-fuel mixture is ignited at an ignition-start engine speed, thereafter, when the engine reaches a revolution-sustainable speed, it is determined that the engine has started.

The characteristic feature of the technique mentioned in the reference is to prepare three values (small, medium and large values) as the desired needle position beforehand. Using these values and controlling the movement of the needle to the desired position one by one, the technique facilitates engine starting when the desired needle position differs depending on the kinds of gas to be used.

Aside from the above, this kind of cogeneration system is expected to be used as an emergency power generation unit at outage of the commercial power source. In case of such an emergency, the user must start the engine by pulling a recoil starter wound around the flywheel to start the generator, let the initialization processing be completed and raise the engine speed to the revolution-sustainable speed quickly.

However, a generated power per pulling of the recoil starter is limited to a small amount and what is worse, the length of the rope of the starter is relatively short. As it takes time to complete the initialization processing in the fashion mentioned above, the operating power produced by pulling of the recoil starter may occasionally be insufficient for the initialization. As a result, the user must manipulate the recoil starter repeatedly.

An object of at least the preferred embodiments of this invention is therefore to overcome the foregoing problem by providing an initialization processing apparatus for a cogeneration system having a gas engine equipped with a jet driven by a stepper motor, which makes it possible for the user to start the engine at outage of the commercial power source and to complete the initialization processing of the motor-driven jet as early as possible.

This invention provides in its first aspect an initialization processing apparatus for a cogeneration system having a gas engine, a generator placed at a position near a flywheel connected to a crankshaft of the engine and adapted to be connectable to an AC power feed line between a commercial power source and an electrical load, and a motor-driven jet having a stepper motor that moves a needle between a fully-opened position (P1) and a fully-closed position (P2) such that gas flowing in a gas supply passage supplied from a gas supply source is regulated and mixed with air flowing in an air supply passage, the apparatus comprising an electronic control unit connected to the commercial power source and the generator, and adapted to conduct initial processing to rotate the stepper motor to move the needle to a desired position when supplied with operating power from the commercial power source at starting of the cogeneration system, characterized by a recoil starter connected to the flywheel of the engine to be manually operable by a user, and an initialization processor (S10, S12) that, at starting the engine by the recoil starter, conducts the initialization processing to rotate the stepper motor by M steps to move the needle towards one of the fully-opened position (P1) and the fully-closed position (P2), and then to rotate the stepper motor by S steps to move the needle towards the other of the fully-opened position (P1) and the fully-closed position (P2), and that is to be supplied with operating power from the generator if no power is supplied from the commercial power source; wherein N > M > S, and wherein N is a number of steps for the needle to move from the fully-opened position (P1) up to the fully-closed position (P2), M is a number of steps for the needle to move towards one of the fully-opened position (P1) and the fully-closed position (P2), and S is a number of steps for the needle to move towards the other of the fully-opened position (P1) and fully-closed position (P2) and indicating a desired position of the needle.

This invention provides in its second aspect an initialization processing method for a cogeneration system having a gas engine, a generator placed at a position near a flywheel connected to a crankshaft of the engine and adapted to be connectable to an AC power feed line between a commercial power source and an electrical load, and a motor-driven jet having a stepper motor that moves a needle between a fully-opened position (P1) and a fully-closed position (P2) such that gas flowing in a gas supply passage supplied from a gas supply source is regulated and mixed with air flowing in an air supply passage, the apparatus comprising an electronic control unit connected to the commercial power source and the generator, and adapted to conduct initial processing to rotate the stepper motor to move the needle to a desired position when supplied with operating power from the commercial power source at starting of the cogeneration system, characterized by the step of conducting the initialization processing at starting the engine by a recoil starter connected to the flywheel of the engine to be manually operable by a user, to rotate the stepper motor by M steps to move the needle towards one of the fully-opened position (P1) and the fully-closed position (P2), and then to rotate the stepper motor by S steps to move the needle towards the other of the fully-opened position (P1) and the fully-closed position (P2), the initialization processing being carried out using operating power supplied from the generator if no power is supplied from the commercial power source; wherein N>M>S, and wherein N is a number of steps for the needle to move from the fully-opened position (P1) up to the fully-closed position (P2); M is a number of steps for the needle to move towards one of the fully-opened position (P1) and the fully-closed position (P2); and S is a number of steps for the needle to move towards the other of the fully-opened position (P1) and the fully-closed position (P2) and indicating a desired position of the needle.

The above and other objects and advantages of the invention will be more apparent from the following description and drawings in which:
FIG. 1 is a block diagram giving an overall view of an initialization processing apparatus for a cogeneration system having a gas engine according to an embodiment of this invention;
FIG. 2 is an enlarged sectional view of a real machine of a mixer including a motor-driven jet shown in FIG. 1;
FIG. 3 is an enlarged schematic sectional view of the mixer including the motor-driven jet shown in FIG. 2;
FIG. 4 is an enlarged sectional view of the motor-driven jet shown in FIG. 3; FIG. 5 is a flowchart showing the initialization processing of an ECU shown in FIG. 1;
FIG. 6 is an explanatory view showing the characteristics of a table used in the processing of the FIG. 5 flowchart;
FIG. 7 is an explanatory view showing the initialization processing of the embodiment in contrast with the prior art; and
FIG. 8 is an explanatory view similarly showing the initialization processing of the embodiment in contrast with the prior art.

An initialization processing apparatus for a cogeneration system having a gas engine according to an embodiment of the invention will now be explained with reference to the attached drawings, by way of example only.

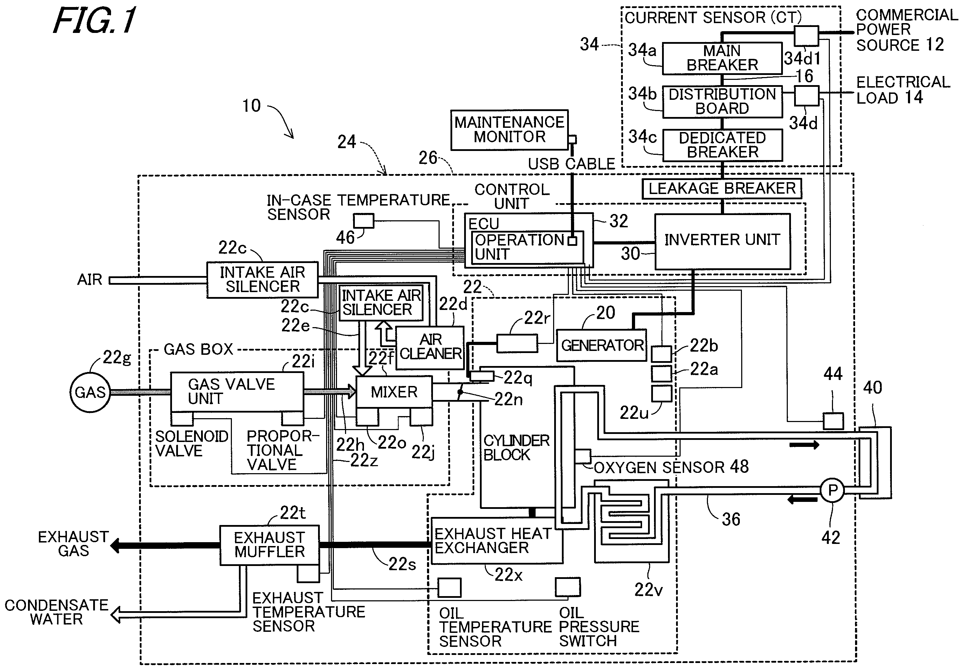

FIG. 1 is a block diagram giving an overall view of an initialization processing apparatus for a cogeneration system having a gas engine according to an embodiment of this invention.

In FIG. 1, reference numeral 10 designates the cogeneration system to which the initialization processing apparatus according to the embodiment is applied.

The cogeneration system 10 is equipped with a power generation unit 24 having a generator 20 connectable to an AC power feed line (power line) 16 between a commercial power source (commercial power network) 12 and electrical load 14, and an internal combustion engine 22 for driving the generator 20. The commercial power source 12 outputs single-phase, three-wire, 100/200 V, 50 Hz (or 60 Hz) AC (alternating current) power. The generation unit 24 is made integral and housed in a generation unit case 26.

Explaining elements constituting the generation unit 24, the engine 22 is a single-cylinder, four-cycle, water-cooled, spark-ignition, OHV engine that runs on the city gas or LP (liquefied petroleum) gas (hereinafter simply called "gas") and has a displacement of, for example, 163 cc.

The cylinder head (not shown) and cylinder block of the gas engine (hereinafter simply called "engine") 22 are laid in the horizontal (lateral) direction in the generation unit case 26, and a piston is reciprocatingly accommodated therein. The piston is connected to the crankshaft (not shown) laid in the vertical direction (direction of the gravity).

A flywheel 22a is attached to the upper end of the crankshaft and has magnet pieces on the inside surface that are arranged to face multi-polar coils constituting the generator 20. The generator 20 produces alternating current when the flywheel rotates such that the multi-polar coils cross the flux emitted from the magnet pieces. The power output (rated output) of the generator 20 is 1.0 kW or thereabout.

The generator 20 is connected to the commercial power source 12, more precisely to the AC power feed line 16 starting from the commercial power source 12 to the electrical load 14 through an inverter (explained later). The generator 20 is supplied with current from the commercial power source 12 under normal situation where no power outage occurs in the source 12, and functions as a starter motor to crank the engine 22, i.e., functions as a starter/generator. A pulsar coil 22b is installed in the outside of the flywheel 22a and produces a pulse signal at every predetermined crank angle, e.g., 30 degrees.

In the engine 22, intake air flows an intake air silencer 22c, an air cleaner 22d and an air supply passage 22e, and flows into a mixer 22f. Gas supplied from a gas (fuel) supply source 22g flows a gas supply passage 22h and flows into the mixer 22f through a gas proportional valve unit 22i, where the gas is mixed with the air.

The gas proportional valve unit 22i comprises an electromagnetic valve and when its solenoid is supplied with current, its spool is moved in a direction A or in a direction B opposite thereto to regulate flow rate of the gas flowing the gas supply passage 22h to an amount determined by the supplied current. The gas thus regulated by the valve unit 22i is supplied to mixer 22f.

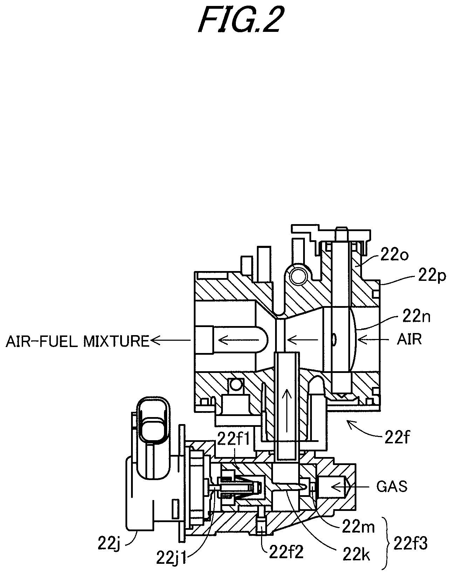

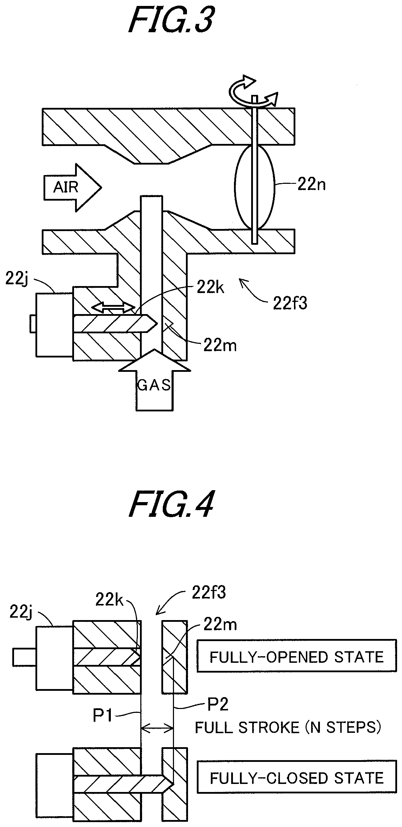

FIG. 2 is an enlarged sectional view of a real machine of the mixer 22f shown in FIG. 1, FIG. 3 is a schematic sectional view of the mixer 22f shown in FIG. 2, and FIG. 4 is an enlarged sectional view of a motor-driven jet shown in FIG. 3.

As shown, the mixer 22f is integrally equipped with a stepper motor 22j and comprises a motor shaft 22j 1 having a lead screw and a plunger 22f1 connected to the motor shaft 22j 1 through a tubular nut bored inside to be meshed with the lead screw, a stopper 22f2 formed at a path of the plunger 22f1, a needle 22k formed at a distal end of the plunger 22f1 and an orifice 22m which the needle 22k goes in and out. Specifically, a rotation of the motor shaft 22j 1 is transformed to a linear movement of the plunger 22f1 and the needle 22k through the lead screw and nut. The linear movement of the needle 22k is limited by the stopper 22f2.

The stepper motor 22j comprises a bipolar motor having two phases, and rotates 1.8 angles per pulse (step angles). The stepper motor 22j moves the needle 22k relative to the orifice 22m when supplied with current (energized). In response to a reciprocating motion of the plunger 22f1 by the stepper motor 22j from a fully-opened position P1 to a fully-closed position P2, an opening formed by the needle 22k and orifice 22m varies between that at fully-opened state and that at fully-closed state, as shown in FIG. 4.

Thus, the mixer 22f has a motor-driven jet 22f3 constituted by at least the needle 22k formed at the distal end of the plunger 22f1, the orifice 22m and the stepper motor 22j. As shown in FIG. 2, the mixer 22f is connected with a throttle body 22p having a throttle electric motor 22o for moving a throttle valve 22n of the engine 22.

As shown in the figure by arrows, the motor-driven jet 22f3 passes the gas flowing in the gas supply passage 22h through the opening determined by the position of the needle 22k (relative to the orifice 22m) between the fully-opened position to the fully-closed position (where the orifice 22m is formed), to the throttle body 22p so as to mix it with the air flowing in the air supply passage 22e. The resulting air-fuel mixture is regulated in its flow rate by the throttle valve 22n.

Returning to the explanation of FIG. 1, the air-fuel mixture produced in the mixer 22f flows into a combustion chamber (not shown). A sparkplug 22q installed near the combustion chamber generates spark discharge between electrodes which face the combustion chamber to ignite and burn the air-fuel mixture when being supplied with an output of a battery (not shown) through an ignition device 22r having a power transistor, ignition coil and the like. The exhaust gas thus generated is discharged to the exterior of the generation unit case 26 through an exhaust pipe 22s and exhaust muffler 22t.

A recoil starter 22u is provided at a location near the flywheel 22a of the engine 22 to be operable by the user. The recoil starter 22u has a rope wound around the flywheel 22a and a grip connected to a distal end of the rope. The recoil starter makes it possible for the user to start the engine manually and operate the generator 20 in case of emergency at outage of the commercial power source 12 and thus functions as an emergency power generation unit.

An oil tank or oil pan 22v is formed below the cylinder block of the engine 22 (the crank case is not illustrated) for retaining lubricant oil of the engine 22. The lubricant oil is pumped up by a gear pump (not shown) to lubricate a sliding portion of the piston or the like, and comes down along a connecting rod (not shown) or wall surface of the cylinder to be retained in the oil tank 22v.

The output of the generator 20 is sent to the inverter unit (now assigned with reference numeral 30) where it is inverted to 100/200 V AC power (single phase) through a DC-DC converter and the like. The inverter unit 30 is connected to an electronic control unit (ECU) 32 constituted as a microcomputer having a CPU, ROM, RAM, I/O and counters.

In other words, the ECU 32 is connected to the commercial power source 12 and generator 20 through the inverter unit 30. The inverter unit 30 switches the function of the generator 20 between the starter and the generator upon receipt of a command sent from the ECU 32.

The output of the inverter unit 30 is sent to an indoor switchboard 34. The switchboard 34 includes a main breaker 34a that prevents over-current and the like, a distribution board 34b that adds power from the power source 12 to the output of the inverter unit 30 and supplies it to the electrical load 14, a dedicated breaker 34c applied for the generation unit 24, a current sensor 34d that is installed in the power feed line 16 between the distribution board 34b and the electrical load 14 to produce an output or signal indicative of AC power current flowing there, and other elements. Specifically, the output of the inverter unit 30 is combined with the power sent from the power source 12 in the switchboard 34 and supplied to the electrical load 14.

Reference numeral 36 designates a passage of coolant composed of antifreeze liquid for cooling the engine 22. The coolant passage 36 passes through the cylinder block and oil tank 22v of the engine 22 and then is connected to a hot water tank (thermal load) 40.

Specifically, the coolant at low temperature is pumped by a pump 42 from the hot water tank 40, flows a tank passage formed in the oil tank 22v to heat-exchange with the lubricant oil to cool down the oil and then is warmed up by heat exchange with exhaust gas in an exhaust-heat exchanger 22x installed at the exhaust pipe 22s. The exhaust-heat exchanger 22x has a structure of covering the exhaust pipe 22s with its shape of, for example, deformation of the coolant passage 36.

The coolant passes a cylinder passage formed in the cylinder block (and the cylinder head) to heat-exchange with the engine 22 for cooling the engine 22. The coolant which became hot by being warmed up by the heat exchange with the exhaust gas and the engine 22 returns to the hot water tank 40 where it warms up retained water to make hot water.

The hot water in the hot water tank 40 is supplied to hot-water supply equipment, heating equipment (neither shown) and the like. Thus the cogeneration system 10 supplies the exhaust heat of the engine 22 to the hot water tank (thermal load) 40, the thermal output (rated output) of which is 2.8 kW or thereabout.

A coolant temperature sensor 44 is disposed near the coolant passage 36, precisely in the vicinity of the hot water tank 40 and near a certain location of the coolant passage 36 where the coolant at high temperature flows, and produces an output or signal indicative of temperature of the coolant flowing there.

An in-case temperature sensor 46 is disposed inside the generation unit case 26 and produces an output or signal indicative of temperature of the in-case temperature, i.e., temperature T at a location near the gas supply passage 22h. An oxygen sensor 48 is disposed at the exhaust system of the engine 22 and produces an output or signal that is inverted each time the exhausted air/fuel ratio changes from rich to lean and vice versa.

The outputs of the above-mentioned pulsar coil 22b, current sensor 34d, coolant temperature sensor 44, in-case temperature sensor 46 and the like are inputted to the ECU 32. The ECU 32 measures time intervals of the outputs, i.e., pulsar signals of the pulsar coil 22b to detect or calculate the engine speed NE and based on the output of the pulsar coil 22b, controls ignition timing of the ignition device 22r. In addition, the ECU 32 controls the air/fuel ratio of the air-fuel mixture regulated by the motor-driven jet 22f3 in response to the output of the oxygen sensor 48 such that the exhaust air/fuel ratio converges on a stoichiometric air/fuel ratio.

In addition to the sensors mentioned above, the generation unit 24 has various sensors as shown in the figure, and the ECU 32 controls operation of the engine 22 based on outputs of the sensors. Since it has no direct relationship with the gist of the invention, no further explanation will be made.

The ECU 32 also detects or calculates electric power demand of the electrical load 14 based on the output of the current sensor 34d, i.e., a value of AC power current flowing the power feed line 16 to the electrical load 14. The ECU 32 detects or calculates thermal demand of the thermal load (hot water tank 40) by transforming the output of the coolant temperature sensor 44, i.e., the coolant temperature.

The ECU 32 controls the electric throttle motor 22o in response to the detected power demand or the like, thereby regulating opening of the throttle valve 22n. In addition to the output of the pulsar coil 22b, the ECU 32 controls the ignition timing of the engine 22 through the ignition device 22r in response to the detected thermal demand.

In addition, the ECU 32 conducts the aforesaid initialization processing of the motor-driven jet 22f3 to move the needle 22k to a desired position by controlling operation of the stepper motor 22j at the time of starting the engine 22. The ECU 32 and the stepper motor 22j are connected by one of conductive wires 22z.

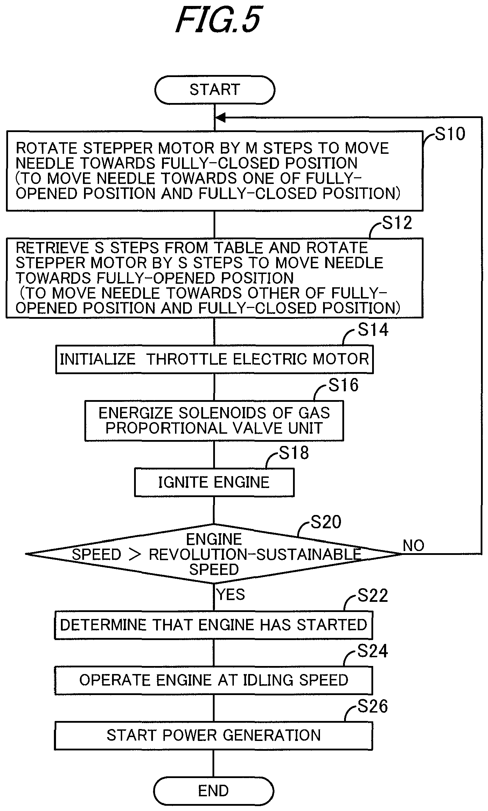

FIG. 5 is a flowchart showing the initialization processing conducted by the ECU 32. The program of the flowchart is executed by the ECU 32 when the user pulls the recoil starter 22u to start the engine 22 and generator 20, so that the ECU 32 is supplied with operating power from the generator 20, under an emergency situation caused by, for example, outage of the commercial power source 12.

The program begins in S10, in which the stepper motor 22j is rotated by M steps to move the needle 22k of the motor-driven jet 22f3 towards the fully-closed position P2 (where the orifice 22m is formed), i.e., to move the needle 22k towards one of the fully-opened position P1 and fully-closed position P2.

Then the program proceeds to S12, in which a value of S (steps) is retrieved from a table by the temperature T at a location near the gas supply passage 22g detected by the in-case temperature sensor 46, and the stepper motor 22j is rotated by S steps to move the needle 22k in the opposite direction towards the fully-opened position P1, i.e., to move the needle 22k towards the other of the fully-opened position P1 and fully-closed position P2. Here, S is a number of steps that define a distance to move the needle 22k towards the fully-opened position P1 and indicating a desired position of the needle 22k.

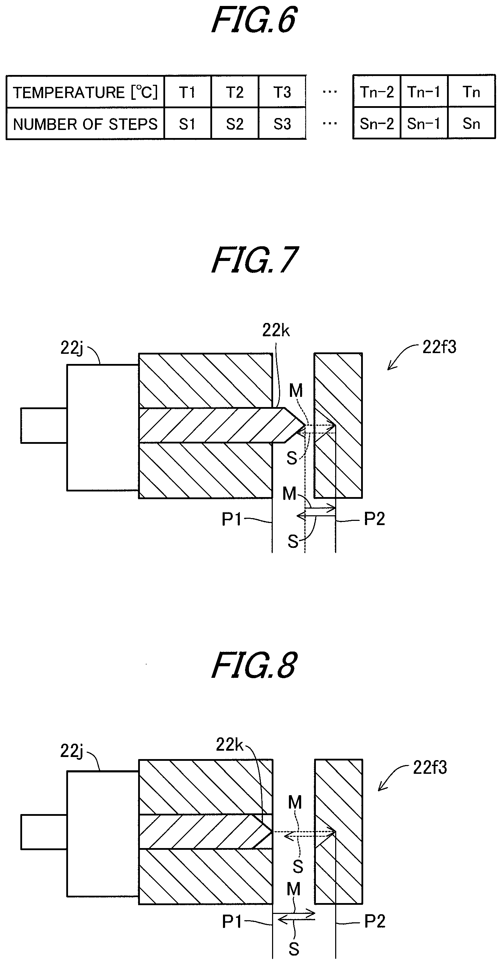

FIG. 6 is an explanatory view showing the characteristics of the table used in the processing at S12 of the FIG. 5 flowchart. As shown, the S (indicative of the desired needle position) is defined from S1 to Sn in accordance with the detected temperature T ranging from T1 to Tn. Specifically, the S is set such that the needle 22k is closer to the fully-closed position P2 as the temperature T decreases.

Returning to the explanation of the FIG. 5 flowchart, the program proceeds to S 14, in which the throttle electric motor 22o is initialized, to S16, in which the solenoid of the gas proportional valve unit 22i is energized, and to S18, in which the engine 22 is ignited when the engine speed detected from the pulsar coil 22b is determined to be equal to or greater than the ignition-start speed.

The program then proceeds to S20, in which it is determined whether the detected engine speed becomes equal to or greater the revolution-sustainable speed and if the result is negative, the program returns back to S10 to repeat the aforesaid procedure including the initialization processing.

On the other hand, when the result in S20 is affirmative, the program proceeds to S22, in which it is determined that the engine 22 has started, to S24, in which the engine 22 is operated at an idling speed, and to S26, in which the power generation is started.

Although not shown, upon receipt of instructions to stop the power generation, the ECU 32 conducts the above-mentioned operation in reverse, i.e., de-energizes the solenoid of the gas proportional valve unit 22i, and discontinues the ignition to stop the engine 22.

As stated above, the embodiment is thus configured to have an initialization processing apparatus and method for a cogeneration system having a gas engine (22), a generator (20) placed at a position near a flywheel (22a) connected to a crankshaft of the engine and adapted to be connectable to an AC power feed line (16) between a commercial power source (12) and an electrical load (14), and a motor-driven jet (22f3) having a stepper motor (22j) that moves a needle (22k) (relative to an orifice (22m)) between a fully-opened position (P1) and a fully-closed position (P2) such that gas flowing in a gas supply passage (22h) supplied from a gas supply source (22g) is regulated and mixed with air flowing in an air supply passage (22e), the apparatus comprising an electronic control unit (32) connected to the commercial power source (12) and the generator (20), and adapted to conduct initialization processing to rotate the stepper motor to move the needle to a desired position when supplied with operating power from the commercial power source (12) at starting of the cogeneration system, characterized by: a recoil starter (22u) connected to the flywheel (22a) of the engine (22) to be manually operable by a user; and an initialization processor (S10, S12) that conducts the initialization processing to rotate the stepper motor (22j) by M steps to move the needle (22k) towards one of the fully-opened position (P1) and the fully-closed position (P2), and then to rotate the stepper motor by S steps to move the needle (22k) towards the other of the fully-opened position (P1) and the fully-closed position (P2), when defining the steps as N > M > S (where N: a number of steps for the needle (22k) to move from the fully-opened position (P1) up to the fully-closed position (P2); M: a number of steps for the needle (22k) to move towards one of the fully-opened position (P1) and the fully-closed position (P2); S: a number of steps for the needle (22k) to move towards the other of the fully-opened position (P1) and the fully-closed position (P2) and indicating a desired position of the needle (22k)) at starting the engine (22) by the recoil starter (22u), and that is to be supplied with operating power from the generator (20) if no power is supplied from the commercial power source 12.

With this, it becomes possible for the user to start the engine 22 and generator 20 at outage of the commercial power source 12 and to complete the initialization processing of the motor-driven jet 22f3 as early as possible.

FIG. 7 is an explanatory view showing the initialization processing of the ECU 32 in contrast with the prior art illustrated by broken lines.

Explaining this with reference to FIG. 7, when the engine 22 is re-started by the recoil starter 22u in response to outage of the commercial power source 14, since the engine 22 was suddenly stopped, it is assumed that the needle 22k would not return to the fully-opened position P2, but stay at any location between the fully-opened position P1 and fully-closed position P2 as shown in the figure.

In the explanation of the figure, it is assumed that the needle was stopped at 30 steps from the fully-opened position P1.

Incidentally, even in a normal situation where no commercial power source outage occurs, insofar as the engine 22 is stopped, since the stepper motor 22j is configured to stop immediately, the needle 22k will not normally be at the fully-opened position P1 or at the fully-closed position P2, but will naturally be at a position between the fully-opened position P1 and fully-closed position P2.

At any rate, since the actual and exact position of the needle 22k is not known, in the initialization processing of the prior art, the stepper motor is rotated by N steps corresponding to a distance necessary for the needle to move from the fully-opened position up to the fully-closed position + margin α (equal to M steps in the embodiment) so that the needle surely runs into and strikes the stopper, and then the stepper motor is rotated by predetermined steps corresponding to a distance necessary for the needle to reach the desired position (equal to S steps in the embodiment).

Accordingly, assuming N: 50 and α : 5, the total steps up to the fully-closed position P2 (one of the positions), i.e., the M step are 55 in the prior art.

Here, it is assumed that the S steps to be moved towards the fully-opened position P1 (the other of the position) is 25.

In the prior art, since the initialization processing is thus completed by moving the needle by a distance corresponding to M (55) steps to P2 until it strikes the stopper and then by moving the needle by a distance corresponding to S (25) steps from P2 towards P1, the total steps applied to the stepper motor are 55 +25 = 80.

As the needle was assumed to be at a position 30 steps from P1 as mentioned above, in other words, it was assumed to be at a position 20 steps from P2, the stepper motor rotates by 30 steps in vain and falls in a step-out state. However, since the needle is surely moved up to P2 to strike the stopper and then returned to the desired position, the needle can definitely be placed at the desired position in the prior art.

On the contrary, in the embodiment, since the steps are defined as N>M>S, if S is similarly assumed to be 25, M may be 35, for example. Accordingly, in the embodiment, the initialization processing is completed by moving the needle 22k towards P2 by a distance correspondence to M (35), and then by moving the needle 22k towards P1 by a distance corresponding to S (25). The total steps applied to the stepper motor 22j are thus 35 + 25 = 60.

Consequently, since it was assumed that the needle 22k was 30 steps from P1 (i.e., 20 steps from P2), the first travel of 35 steps is redundant by 15. However, when compared to the prior art, the total steps can be decreased by 20.

In addition, since the needle 22k is normally at a position between the fully-closed position P1 and fully-opened position P2 at first as mentioned above, the needle 22k may reach the fully-closed position P2 in most cases even though M is set to be N>M, and hence the needle may also be brought to the desired position.

Thus, the steps to be applied to the stepper motor 22j are defined as N>M>S in the embodiment.

Specifically, by defining as N>M, it becomes possible to decrease a number of steps at least by the redundant margin α of the prior art that could induce the motor step-out. In addition, since the needle 22k is normally at a position between the fully-closed position P1 and fully-opened position P2 at first as mentioned above, the needle 22k may reach the fully-closed position P2 in most cases and the needle 22k may also be brought to the desired position.

Therefore, it becomes possible to complete the initialization processing earlier by the decrease in the value of M, and to raise the engine speed to the ignition-start speed in the rest of time period obtained by the user's one pulling of the recoil starter 22u. Also it becomes possible to increase the possibility to start the engine 22 within the time period obtained by the one pulling of the recoil starter 22u.

Further, by defining as M>S, it becomes possible to move the needle 22k to the fully-closed position P2 definitely. This is because the desired position of the needle 22k in the initialization processing is naturally set to be at a position close to the fully-closed position P2 rather than at a position close to the fully-opened position P1.

In that case, if they are defined as M<S, since the needle 22k will accordingly be moved towards the fully-opened position P1 by a distance greater than that towards the fully-closed position P2, the needle 22k could occasionally fail to reach the fully-closed position P2. However, since they are defined as M>S, such a problem can normally be avoided.

FIG. 8 is an explanatory view showing the initialization processing of the ECU 32 in contrast with the prior art illustrated by broken lines. FIG. 8 shows a case in which the needle 22k is stuck to the fully-closed position P1 for some reasons.

Another example will be explained with reference to this figure.

In the prior art, when S is defined, for example, as 40, since M is 55, the sum of the steps will be 55 + 40 = 95. On the contrast, in the embodiment, the needle 22k is moved by a distance corresponding to M (e.g., 45) towards P2, and is then moved by a distance corresponding to S (40) from not P2, but from a midway position having moved by a distance corresponding to M steps from P1, the sum of steps will be 45 + 40 = 85, thereby enabling to decrease the sum by 10 compared to the prior art.

Here, it should be noted that, in the prior art, the needle can surely be moved to the desired position. On the contrary, in the embodiment, the needle 22k is moved to a position that is deviated from the original desired position by 5, since the needle 22k is immediately returned towards P1 by the distance corresponding to S (40) from the midway position having moved there from P1 by the distance corresponding to M. As a result, the reached position is 40 + (50 - 45) = 45 and is deviated from the original desired position by 5.

Nevertheless, by defining as M>S, the needle 22k can definitely be moved to the fully-closed position P2 if the user pulls the recoil starter 22u on several occasions, and hence the user can finally move the needle 22k to the original desired position. Even if the engine 22 was started with the needle 22k placed at a position deviated from the desired position, it can also be corrected, for example, by controlling the air/fuel ratio to a desired value in a feedback fashion.

The apparatus and method further includes: a temperature sensor (in-case temperature sensor 46) adapted to detect a temperature T at a location near the gas supply passage (22h); and the S steps are set to be retrievable in accordance with the detected temperature.

With this, in addition to the effects and advantages mentioned above, it becomes possible to set them appropriately in accordance with the detected temperature.

In the apparatus and method, the S steps are set such that the needle is closer to the fully-closed position (P2) as the detected temperature decreases.

With this, in addition to the effects and advantages mentioned above, it becomes possible to complete the initialization processing earlier.

In the apparatus and method, the engine (22) is ignited when a speed of the engine becomes equal to or greater than a predetermined engine speed (S18).

With this, in addition to the effects and advantages mentioned above, it becomes possible to start the engine 22 earlier.

It should be noted that, although the value M is determined separately from the value S, it is alternatively possible to determine the value M by adding an appropriate value to a maximum value of S.

It should be noted that, although the rated output of the generator 20, the rated thermal output and displacement of the engine 22 and the like are shown by specific values in the foregoing embodiment, but they are only examples and should not be limited thereto.

It should further be noted that, although the AC power outputted from the commercial power source 12 is defined as 100/200 V in the foregoing embodiment, when the power source 12 outputs AC power exceeding 100/200 V, naturally the generation unit 24 outputs voltage corresponding to that power.

## Claims

1. An initialization processing apparatus for a cogeneration system having a gas engine (22), a generator (20) placed at a position near a flywheel (22a) connected to a crankshaft of the engine and adapted to be connectable to an AC power feed line (16) between a commercial power source (12) and an electrical load (14), and a motor-driven jet (22f3) having a stepper motor (22j) that moves a needle (22k) between a fully-opened position (P1) and a fully-closed position (P2) such that gas flowing in a gas supply passage (22h) supplied from a gas supply source (22g) is regulated and mixed with air flowing in an air supply passage (22e), the apparatus comprising an electronic control unit (32) connected to the commercial power source (12) and the generator (20), and adapted to conduct initial processing to rotate the stepper motor to move the needle to a desired position when supplied with operating power from the commercial power source (12) at starting of the cogeneration system,
**characterized by**:
a recoil starter (22u) connected to the flywheel (22a) of the engine (22) to be manually operable by a user; and
an initialization processor (S10, S12) that, at starting the engine (22) by the recoil starter (22u), conducts the initialization processing to rotate the stepper motor (22j) by M steps to move the needle (22k) towards one of the fully-opened position (P1) and the fully-closed position (P2), and then to rotate the stepper motor by S steps to move the needle (22k) towards the other of the fully-opened position (P1) and the fully-closed position (P2), and that is to be supplied with operating power from the generator (20) if no power is supplied from the commercial power source (12);
wherein N > M > S, and
wherein N is a number of steps for the needle (22k) to move from the fully-opened position (P1) up to the fully-closed position (P2);
M is a number of steps for the needle (22k) to move towards one of the fully-opened position (P1) and the fully-closed position (P2); and
S is a number of steps for the needle (22k) to move towards the other of the fully-opened position (P1) and fully-closed position (P2) and indicating a desired position of the needle (22k).

2. The apparatus according to claim 1, further including:
a temperature sensor (46) adapted to detect a temperature at a location near the gas supply passage (22h); and
the S steps are set to be retrievable in accordance with the detected temperature.

3. The apparatus according to claim 2, wherein the S steps are set such that the needle is closer to the fully-closed position (P2) as the detected temperature decreases.

4. The apparatus according to any of claims 1 to 3, wherein the engine (22) is ignited when a speed of the engine becomes equal to or greater than a predetermined engine speed (S18).

5. An initialization processing method for a cogeneration system having a gas engine (22), a generator (20) placed at a position near a flywheel (22a) connected to a crankshaft of the engine and adapted to be connectable to an AC power feed line (16) between a commercial power source (12) and an electrical load (14), and a motor-driven jet (22f3) having a stepper motor (22j) that moves a needle (22k) between a fully-opened position (P1) and a fully-closed position (P2) such that gas flowing in a gas supply passage (22h) supplied from a gas supply source (22g) is regulated and mixed with air flowing in an air supply passage (22e), the apparatus comprising an electronic control unit (32) connected to the commercial power source (12) and the generator (20), and adapted to conduct initial processing to rotate the stepper motor to move the needle to a desired position when supplied with operating power from the commercial power source (12) at starting of the cogeneration system,
**characterized by** the step of:
conducting the initialization processing at starting the engine (22) by a recoil starter (22u) connected to the flywheel (22a) of the engine (22) to be manually operable by a user, to rotate the stepper motor (22j) by M steps to move the needle (22k) towards one of the fully-opened position (P1) and the fully-closed position (P2), and then to rotate the stepper motor by S steps to move the needle (22k) towards the other of the fully-opened position (P1) and the fully-closed position (P2), the initialization processing being carried out using operating power supplied from the generator (20) if no power is supplied from the commercial power source (12);
wherein N > M > S, and
wherein N is a number of steps for the needle (22k) to move from the fully-opened position (P1) up to the fully-closed position (P2);
M is a number of steps for the needle (22k) to move towards one of the fully-opened position (P1) and the fully-closed position (P2); and
S is a number of steps for the needle (22k) to move towards the other of the fully-opened position (P1) and the fully-closed position (P2) and indicating a desired position of the needle (22k).

6. The method according to claim 5, further including the step of:
detecting a temperature at a location near the gas supply passage (22h); and
the S steps are set to be retrievable in accordance with the detected temperature.

7. The method according to claim 6, wherein the S steps are set such that the needle is closer to the fully-closed position (P2) as the detected temperature decreases.

8. The method according to any of claims 5 to 7, further including the step of: igniting the engine (22) when a speed of the engine becomes equal to or greater than a predetermined engine speed (S18).

## Patentansprüche

1. Initialisierungsverarbeitungsvorrichtung für ein Kraft-Wärme-Kopplungssystem mit einem Gasmotor (22), einem Generator (20), der an einer Position nahe einem Schwungrad (22a) angeordnet ist, das mit einer Kurbelwelle des Motors verbunden und dazu geeignet ist, mit einer WS-Stromzuleitung (16) zwischen einer kommerziellen Stromquelle (12) und einer elektrischen Last (14) verbindbar zu sein, und einer motorbetriebenen Strahldüse (22f3) mit einem Schrittmotor (22j), der eine Nadel (22k) zwischen einer vollständig geöffneten Position (P1) und einer vollständig geschlossenen Position (P2) bewegt, sodass Gas, das in einem Gaszufuhrdurchgang (22h) strömt, der von einer Gasversorgungsquelle (22g) versorgt wird, reguliert und mit Luft, die in einem Luftzufuhrdurchgang (22e) strömt, vermischt wird, wobei die Vorrichtung eine elektrische Steuereinheit (32) umfasst, die mit der kommerziellen Stromquelle (12) und dem Generator (20) verbunden ist und dazu geeignet ist, anfängliches Verarbeiten zum Drehen des Schrittmotors zum Bewegen der Nadel zu einer gewünschten Position durchzuführen, wenn sie mit Betriebsstrom von der kommerziellen Stromquelle (12) beim Starten des Kraft-Wärme-Kopplungssystem versorgt wird, **gekennzeichnet durch**:
einen Reversierstarter (22u), der mit dem Schwungrad (22a) des Motors (22) verbunden ist, zum manuellen Betrieb **durch** einen Benutzer; und
einen Initialisierungsprozessor (S10, S12), der, beim Starten des Motors (22) **durch** den Reversierstarter (22u), die Initialisierungsverarbeitung zum Drehen des Schrittmotors (22j) um M Schritte zum Bewegen der Nadel (22k) zu einer der vollständig geöffneten Position (P1) und der vollständig geschlossenen Position (P2) hin und dann zum Drehen des Schrittmotors um S Schritte zum Bewegen der Nadel (22k) zur anderen der vollständig geöffneten Position (P1) und der vollständig geschlossenen Position (P2) hin durchführt und der mit Betriebsstrom vom Generator (20) versorgt werden soll, wenn kein Strom von der kommerziellen Stromquelle (12) zugeführt wird;
wobei N > M > S ist, und
wobei N eine Anzahl von Schritten ist, damit sich die Nadel (22k) von der vollständig geöffneten Position (P1) zur vollständig geschlossenen Position (P2) bewegt;
M eine Anzahl von Schritten ist, damit sich die Nadel (22k) zu einer der vollständig geöffneten Position (P1) und vollständig geschlossenen Position (P2) bewegt; und
S eine Anzahl von Schritten ist, damit sich die Nadel (22k) zur anderen der vollständig geöffneten Position (P1) und vollständig geschlossenen Position (P2) bewegt und eine gewünschte Position der Nadel (22k) anzeigt.

2. Vorrichtung nach Anspruch 1, ferner enthaltend:
einen Temperatursensor (46), der zum Erkennen einer Temperatur an einer Stelle nahe dem Gaszufuhrdurchgang (22h) geeignet ist; und
wobei die S Schritte derart eingestellt sind, dass sie gemäß der erkannten Temperatur abrufbar sind.

3. Vorrichtung nach Anspruch 2, wobei die S Schritte derart eingestellt sind, dass die Nadel näher an der vollständig geschlossenen Position (P2) ist, wenn die erkannte Temperatur steigt.

4. Vorrichtung nach einem der Ansprüche 1 bis 3, wobei der Motor (22) gezündet wird, wenn eine Drehzahl des Motors gleich einer oder größer als eine vorgegebene Motordrehzahl wird (S18).

5. Initialisierungsverarbeitungsverfahren für ein Kraft-Wärme-Kopplungssystem mit einem Gasmotor (22), einem Generator (20), der an einer Position nahe einem Schwungrad (22a) angeordnet ist, das mit einer Kurbelwelle des Motors verbunden und dazu geeignet ist, mit einer WS-Stromzuleitung (16) zwischen einer kommerziellen Stromquelle (12) und einer elektrischen Last (14) verbindbar zu sein, und einer motorbetriebenen Strahldüse (22f3) mit einem Schrittmotor (22j), der eine Nadel (22k) zwischen einer vollständig geöffneten Position (P1) und einer vollständig geschlossenen Position (P2) bewegt, sodass Gas, das in einem Gaszufuhrdurchgang (22h) strömt, der von einer Gasversorgungsquelle (22g) versorgt wird, reguliert und mit Luft, die in einem Luftzufuhrdurchgang (22e) strömt, vermischt wird, wobei die Vorrichtung eine elektrische Steuereinheit (32) umfasst, die mit der kommerziellen Stromquelle (12) und dem Generator (20) verbunden ist und dazu geeignet ist, anfängliches Verarbeiten zum Drehen des Schrittmotors zum Bewegen der Nadel zu einer gewünschten Position durchzuführen, wenn sie mit Betriebsstrom von der kommerziellen Stromquelle (12) beim Starten des Kraft-Wärme-Kopplungssystem versorgt wird, **gekennzeichnet durch** den Schritt des:
Durchführens der Initialisierungsverarbeitung beim Starten des Motors (22) **durch** einen Reversierstarter (22u), der mit dem Schwungrad (22a) des Motors (22) verbunden ist, zum manuellen Betrieb **durch** einen Benutzer, zum Drehen des Schrittmotors (22j) um M Schritte zum Bewegen der Nadel (22k) zu einer der vollständig geöffneten Position (P1) und der vollständig geschlossenen Position (P2) hin und dann zum Drehen des Schrittmotors um S Schritte zum Bewegen der Nadel (22k) zur anderen der vollständig geöffneten Position (P1) und der vollständig geschlossenen Position (P2) hin, wobei die Initialisierungsverarbeitung unter Benutzung von Betriebsstrom vom Generator (20) ausgeführt wird, wenn kein Strom von der kommerziellen Stromquelle (12) zugeführt wird;
wobei N > M > S ist, und
wobei N eine Anzahl von Schritten ist, damit sich die Nadel (22k) von der vollständig geöffneten Position (P1) zur vollständig geschlossenen Position (P2) bewegt;
M eine Anzahl von Schritten ist, damit sich die Nadel (22k) zu einer der vollständig geöffneten Position (P1) und vollständig geschlossenen Position (P2) bewegt; und
S eine Anzahl von Schritten ist, damit sich die Nadel (22k) zur anderen der vollständig geöffneten Position (P1) und vollständig geschlossenen Position (P2) bewegt und eine gewünschte Position der Nadel (22k) anzeigt.

6. Verfahren nach Anspruch 5, ferner folgenden Schritt enthaltend:
Erkennen einer Temperatur an einer Stelle nahe dem Gaszufuhrdurchgang (22h); und
wobei die S Schritte derart eingestellt sind, dass sie gemäß der erkannten Temperatur abrufbar sind.

7. Verfahren nach Anspruch 6, wobei die S Schritte derart eingestellt sind, dass die Nadel näher an der vollständig geschlossenen Position (P2) ist, wenn die erkannte Temperatur steigt.

8. Verfahren nach einem der Ansprüche 5 bis 7, ferner folgenden Schritt enthaltend: Zünden des Motors (22), wenn eine Drehzahl des Motors gleich einer oder größer als eine vorgegebene Motordrehzahl wird (S18).

## Revendications

1. Appareil de traitement d'initialisation pour un système de cogénération ayant un moteur à gaz (22), un générateur (20) placé dans une position proche d'un volant (22a) raccordé à un vilebrequin du moteur et adapté pour pouvoir être connecté à une ligne d'alimentation électrique CA (16) entre une source d'alimentation commerciale (12) et une charge électrique (14), et un injecteur entraîné par moteur (22f3) ayant un moteur pas-à-pas (22j) qui déplace une aiguille (22k) entre une position complètement ouverte (P1) et une position complètement fermée (P2) de sorte que le gaz s'écoulant dans un passage d'alimentation en gaz (22h) alimenté par une source d'alimentation en gaz (22g) soit régulé et mélangé à de l'air s'écoulant dans le passage d'alimentation en air (22e), l'appareil comprenant une unité de commande électronique (32) connectée à la source d'alimentation commerciale (12) et au générateur (20) et adaptée pour effectuer un traitement initial afin de faire tourner le moteur pas-à-pas pour déplacer l'aiguille dans une position souhaitée lorsqu'elle est alimentée en énergie opératoire par la source d'alimentation commerciale (12) au démarrage du système de cogénération, **caractérisé par** :
un démarreur à lanceur (22u) raccordé au volant (22a) du moteur (22) pour pouvoir être actionné à la main par un utilisateur ; et
un processeur d'initialisation (S10, S12) qui, au démarrage du moteur (22) par le démarreur à lanceur (22u) effectue le traitement d'initialisation pour faire tourner le moteur pas-à-pas (22j) par M étapes pour déplacer l'aiguille (22k) vers l'une de la position complètement ouverte (P1) et de la position complètement fermée (P2) et faire tourner ensuite le moteur pas-à-pas par S étapes de façon à déplacer l'aiguille (22K) vers l'autre de la position complètement ouverte (P1) et de la position complètement fermée (P2), et qui doit être alimenté par de l'énergie opératoire provenant du générateur (20) si aucune énergie n'est fournie par la source d'alimentation commerciale (12) ;
dans lequel N > M > S et
dans lequel N est un nombre d'étapes pour que l'aiguille (22k) se déplace de la position complètement ouverte (P1) à la position complètement fermée (P2) ;
M est un nombre d'étapes pour que l'aiguille (22k) se déplace vers l'une de la position complètement ouverte (P1) et de la position complètement fermée (P2) ; et
S est un nombre d'étapes pour que l'aiguille (22k) se déplace vers l'autre de la position complètement ouverte (P1) et de la position complètement fermée (P2) et indiquant une position souhaitée de l'aiguille (22k).

2. Appareil selon la revendication 1, comprenant en outre :
un capteur de température (46) adapté pour détecter une température à un emplacement proche du passage d'alimentation en gaz (22h) ; et
les S étapes sont réglées pour pouvoir être récupérées en fonction de la température détectée.

3. Appareil selon la revendication 2, dans lequel les S étapes sont réglées de sorte que l'aiguille soit plus proche de la position complètement fermée (P2) lorsque la température détectée diminue.

4. Appareil selon l'une quelconque des revendications 1 à 3, dans lequel le moteur (22) est allumé lorsque la vitesse du moteur devient égale ou supérieure à une vitesse prédéterminée (S18) du moteur.

5. Procédé de traitement d'initialisation pour un système de cogénération ayant un moteur à gaz (22), un générateur (20) placé dans une position proche d'un volant (22a) raccordé à un vilebrequin du moteur et adapté pour pouvoir être connecté à une ligne d'alimentation électrique CA (16) entre une source d'alimentation commerciale (12) et une charge électrique (14), et un injecteur entraîné par moteur (22f3) ayant un moteur pas-à-pas (22j) qui déplace une aiguille (22k) entre une position complètement ouverte (P1) et une position complètement fermée (P2) de sorte que le gaz s'écoulant dans un passage d'alimentation en gaz (22h) alimenté par une source d'alimentation en gaz (22g) soit régulé et mélangé à de l'air s'écoulant dans le passage d'alimentation en air (22e), l'appareil comprenant une unité de commande électronique (32) connectée à la source d'alimentation commerciale (12) et au générateur (20) et adaptée pour effectuer un traitement initial afin de faire tourner le moteur pas-à-pas pour déplacer l'aiguille dans une position souhaitée lorsqu'elle est alimentée en énergie opératoire par la source d'alimentation commerciale (12) au démarrage du système de cogénération, **caractérisé par** l'étape consistant à :
effectuer le traitement d'initialisation au démarrage du moteur (22) par un démarreur à lanceur (22u) raccordé au volant (22a) du moteur (22) pour pouvoir être actionné à la main par un utilisateur, pour faire tourner le moteur pas-à-pas (22j) par M étapes pour déplacer l'aiguille (22k) vers l'une de la position complètement ouverte (P1) et de la position complètement fermée (P2) et faire tourner ensuite le moteur pas-à-pas par S étapes de façon à déplacer l'aiguille (22k) vers l'autre de la position complètement ouverte (P1) et de la position complètement fermée (P2), le traitement d'initialisation étant effectué en utilisant de l'énergie opératoire fournie par le générateur (20) si aucune énergie n'est fournie par la source d'alimentation commerciale (12) ;
dans lequel N > M > S et
dans lequel N est un nombre d'étapes pour que l'aiguille (22k) se déplace de la position complètement ouverte (P1) à la position complètement fermée (P2) ;
M est un nombre d'étapes pour que l'aiguille (22k) se déplace vers l'une de la position complètement ouverte (P1) et de la position complètement fermée (P2) ; et
S est un nombre d'étapes pour que l'aiguille (22k) se déplace vers l'autre de la position complètement ouverte (P1) et de la position complètement fermée (P2) et indiquant une position souhaitée de l'aiguille (22k).

6. Procédé selon la revendication 5, comprenant en outre l'étape consistant à :
détecter une température à un emplacement proche du passage d'alimentation en gaz (22h) ; et
les S étapes étant réglées pour pouvoir être récupérées en fonction de la température détectée.

7. Procédé selon la revendication 6, dans lequel les S étapes sont réglées de sorte que l'aiguille soit plus proche de la position complètement fermée (P2) lorsque la température détectée diminue.

8. Procédé selon l'une quelconque des revendications 5 à 7, comprenant en outre l'étape d'allumage du moteur (22) lorsque la vitesse du moteur devient égale ou supérieure à une vitesse prédéterminée (S18) du moteur.
